Europäisches Patentamt

European Patent Office

Office européen des brevets

(19)

(11) Veröffentlichungsnummer: **0 025 231**
**B1**

(12) **EUROPÄISCHE PATENTSCHRIFT**

(45) Veröffentlichungstag der Patentschrift:
**08.06.83**

(51) Int. Cl.³: **B 23 P 1/08**

(21) Anmeldenummer: **80105394.3**

(22) Anmeldetag: **09.09.80**

(54) **Elektrodenanordnung mit Dielektrikumseinspeisung für Elektroerosionsvorrichtungen.**

(30) Priorität: **10.09.79 FR 7922520**

(43) Veröffentlichungstag der Anmeldung:
**18.03.81 Patentblatt 81/11**

(45) Bekanntmachung des Hinweises auf die Patenterteilung:
**08.06.83 Patentblatt 83/23**

(84) Benannte Vertragsstaaten:
**CH DE GB IT LI NL**

(56) Entgegenhaltungen:
**US-A-3 441 705**
**US-A-4 159 407**

(73) Patentinhaber: **Le Carbone Lorraine S.A., Tour Manhattan 5-6 Place de l'Iris La Défense 2, F-92400 Courbevoie (FR)**

(72) Erfinder: **Petitimbert, Jean, 23, rue de la Convention, F-95600-Eaubonne (FR)**

(74) Vertreter: **Lewinsky, Dietrich et al, Gotthardstrasse 81, D-8000 München 21 (DE)**

## Elektrodenanordnung für eine Elektroerosionsvorrichtung

Die Erfindung betrifft eine Elektrodenanordnung für eine Elektroerosionsvorrichtung, mit einer Trägerplatte für die Elektrode und einer Einspeisevorrichtung für ein flüssiges Dielektrikum.

Eine derartige Elektrodenanordnung ist aus der US-A Nr. 4 159 407 bekannt. Die Einspeisevorrichtung für das Dielektrikum besteht aus einer in Abstand von dem Werkstück und der Vielfachelektrode angeordneten Düse, die auf den Arbeitsbereich gerichtet ist. Zur Herstellung tiefer Schlitze geringer Breite ist es erforderlich, den Kopf der Elektroerosionsvorrichtung wiederholt anzuheben, um die im Laufe des Bearbeitungsvorganges erodierten Teilchen mittels der dielektrischen Flüssigkeit aus der Bearbeitungszone fortzuspülen. Diese zwischengeschalteten Spülvorgänge verlängern die Bearbeitungszeit des Werkstückes. Mit fortschreitender Tiefe der Schlitze ist ferner auf diese Weise eine befriedigende Entfernung der erodierten Teilchen aus der Bearbeitungszone kaum noch zu erreichen.

Aus der US-A Nr. 3 441 705 ist eine Elektrodenanordnung für eine Elektroerosionsvorrichtung zur Herstellung von Fräsern bekannt, bei der eine Einspeisevorrichtung für ein flüssiges Dielektrikum verwendet wird, die an dem das Werkstück enthaltenden Tank befestigt ist, in ständiger Berührung mit dem Werkstück gehalten wird und mehrere Austrittsöffnungen für das Dielektrikum hat. Wegen des gut zugänglichen Arbeitsbereiches stellt dessen Freispülen von erodierten Teilchen allerdings kein Problem dar.

Der Erfindung liegt die Aufgabe zugrunde, eine Elektrodenanordnung der eingangs genannten Art zu schaffen, die ein kontinuierliches Erodieren besonders tiefer und schmaler Schlitze ermöglicht.

Diese Aufgabe ist erfindungsgemäss dadurch gelöst, dass die Einspeisevorrichtung an der Trägerplatte parallel zu einer Seitenfläche der Elektrode verschiebbar befestigt ist, durch eine Vorrichtung ständig in Berührung mit dem Werkstück gehalten wird und eine nichtleitende Einspeisebühne mit mehreren Öffnungen umfasst, die dem Arbeitsbereich das Dielektrikum in mehreren gerichteten Strahlen zuführt.

Hierbei sind die Zahl, die Form, die Verteilung und die Ausrichtung der Öffnungen der Einspeisebühne an die Länge der Elektrode angepasst.

In den Unteransprüchen sind vorteilhafte Ausführungsformen und Weiterbildungen der Elektrodenanordnung nach der Erfindung angegeben.

Die Erfindung wird im folgenden anhand eines in der Zeichnung schematisch dargestellten Ausführungsbeispieles näher erläutert.

Auf der Elektrodenträgerplatte 1 ist eine Elektrode 2 befestigt, die zur Bearbeitung des Werkstücks 3 vorgesehen ist.

Die Trägerplatte 1 trägt eine Vorrichtung zur Einspeisung eines Dielektrikums, die im wesentlichen folgendes umfasst:

— eine Einspeisebühne 4 für das Dielektrikum,
— eine Trägerschiene 5 für die Einspeisebühne 4 mit einem Anschlussstutzen 6 für die Zufuhr des Dielektrikums und mit Schrauben 7, die erforderlichenfalls die Anpassung der Einspeisebühne 4 an das Werkstück 3 ermöglichen, und

— einen beweglichen Schlitten 8, der ein Schwenklager 9 mit Drehzapfen 10 trägt, die auf einer V-förmigen Auflage 11 lagern; das Schwenklager 9 dient zum Schwenken der Trägerschiene 5 für die Einspeisebühne 4.

Wenn die Einstellungen beendet sind, wird der Schlitten 8 durch eine Schraube 12 und das Schwenklager 9 mit Hilfe einer Schraube 13 festgelegt. Eine Feder 14, die an der Trägerschiene 5 befestigt ist, drückt die Einspeisebühne 4 dauernd gegen das Werkstück 3.

Die Elektrodenträgerplatte 1 weist des weiteren ein Zwischenstück 15 auf, mit dem die Elektrodenanordnung am Kopf einer Elektroerosionsvorrichtung (nicht dargestellt) befestigt werden kann.

Die mit der Erfindung erzielbaren Vorteile werden durch das nachstehend wiedergegebene Ausführungsbeispiel erläutert:

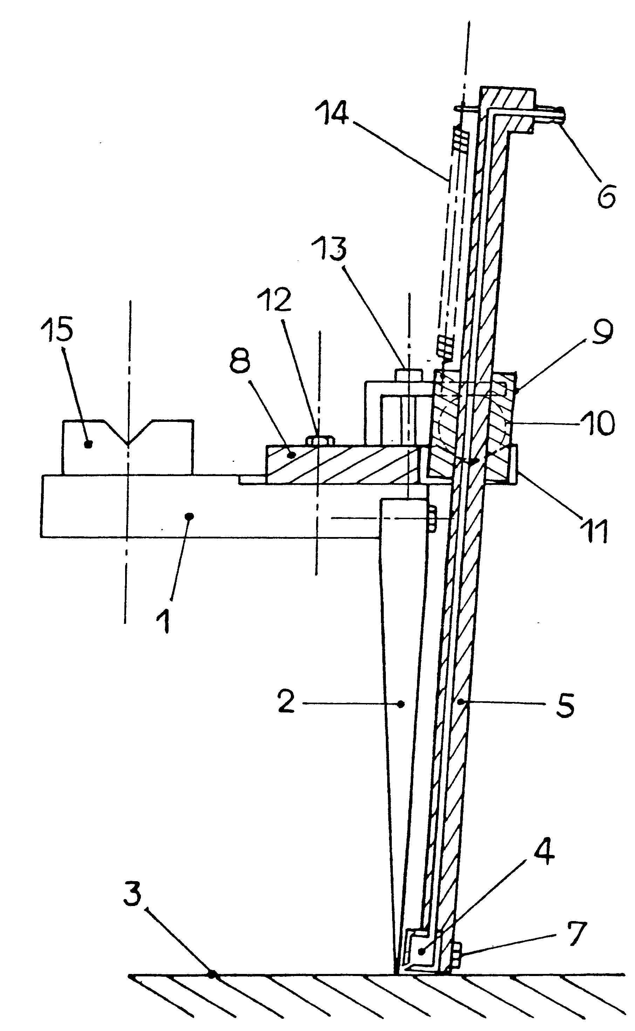

Eine Elektrodenanordnung, wie sie in Fig. 1 dargestellt ist, wird zur Herstellung von tiefen schmalen Schlitzen in einem Edelstahlblock verwendet, der zur Herstellung von Gussformen dient, d.h. in einem Stahlblock mit 12% Chromgehalt.

Die aus Graphit bestehende Arbeitselektrode weist eine Länge von 150 mm und eine Dicke von 1 mm an der dünnsten Stelle auf. Der Winkel an der Spitze beträgt 2°. Als Dielektrikum wird ein Öl mit einer Viskosität von 7,4 cSt und einem Entzündungspunkt von 132° C verwendet.

Die Arbeitsweise ist folgende: Die Elektrodenanordnung wird an dem Kopf einer Elektroerosionsvorrichtung befestigt und das Werkstück 3 wird in dem Behälterkasten der Vorrichtung angeordnet. Danach wird die Elektrode 2 an der Trägerplatte 1 befestigt und in ihre Arbeitsposition (Achsen X, Y) gebracht. Die Neigung der Einspeisevorrichtung wird mit Hilfe des Drehlagers 9 so eingestellt, dass die Trägerschiene 5 parallel zur Fläche der Elektrode 2 ist. Nach Erreichen der richtigen Neigung wird die Einheit mit Hilfe der Schraube 13 festgelegt. Der Abstand zwischen der Einpeisebühne 4 und der Elektrode 2 muss so klein wie möglich sein. Die Einstellung erfolgt durch Verschieben des Schlittens 8 und seiner Festlegung durch die Schraube 12. Erforderlichenfalls wird die Einspeisebühne in bezug auf das zu bearbeitende Werkstück mit Hilfe der Schrauben 7 ausgerichtet. An dem Anschlussstutzen 6 wird ein Zuleitungsschlauch für das Dielektrikum aufgesteckt und es wird ein Strömungsversuch für das Dielektrikum vorgenommen. Danach wird die Einheit in einem Trockenversuch, d.h. ohne Stromzufuhr, getestet. Unter Beachtung der Bedienungsvorschriften für die Elektroerosionsvorrichtung beginnt nun die Bearbeitung, wobei die Durchsatzmenge des Dielektrikums in Abhängigkeit von der Entwicklung der Oberflächen variiert wird.

Ohne Schwierigkeiten können Schlitze von 50 mm Tiefe in einem Stahlblock gefertigt werden, wobei Betriebskorrekturen bei der Einstellung des Impulsgenerators im Laufe der Bearbeitung vorzunehmen sind. Es können Schlitztiefen von 60 mm erreicht werden, was mit Geräten nach dem Stande der Technik (Heben und Senken des Kopfes oder Spülung durch einen Schlauch) nur schwierig zu erreichen ist.

Bei der Herstellung von Schlitztiefen von 50 mm können Elektrodenvorschubgeschwindigkeiten von mehr als 0,75 mm/min erhalten werden, während bei klassischen Vorrichtungen die Vorschubgeschwindigkeiten bei etwa 0,2 mm/min lagen und auch nur bei Tiefen bis 20 mm. Die mittlere Vorschubgeschwindigkeit ergibt sich wegen der Anhaftzeit zu 0,6 mm/min.

Ein Schlitz von 150 mm Länge, 1 mm Breite an seiner schmälsten Stelle und einem Spitzenwinkel von 2° wird über eine Tiefe von 50 mm in einem Stahlblock mit einer einzigen Graphitelektrode in 84 min gefertigt.

Der gleiche Vorgang erfordert bei herkömmlichen Anordnungen die Verwendung mehrerer Elektroden (die Elektrode wird während des Bearbeitungsvorgangs zerstört und muss mehrfach erneuert werden) und dauert bestenfalls mehrere Stunden.

Darüber hinaus ist anzumerken, dass die angegebenen Ergebnisse keineswegs als optimale Ergebnisse betrachtet werden können, vielmehr sind diese das Ergebnis einer durchschnittlichen Einstellung, die dazu getroffen wurde, um die Möglichkeit einer Automatisierung sowohl im Bereich des elektrischen Impulsgenerators als auch bei der Durchsatzmenge des Dielektrikums, offen zu halten.

Neben dem Vorteil dieser Automatisierungsmöglichkeit weist die Erfindung noch folgende Vorteile auf:

— die Elektrodenanordnung nach der Erfindung ist ein Zubehörteil für eine Elektroerosionsvorrichtung, das keinerlei elektrische Steuerung erfordert und an allen Elektroerosionsvorrichtungen zusätzlich installiert werden kann. Zwar ist der Anschluss an ein Einspeisungssystem für ein Dielektrikum erforderlich, jedoch genügt im allgemeinen das auf einer üblichen Elektroerosionsvorrichtung angeordnete. Es reicht aus, wenn dieses eine solche Durchsatzmenge liefern kann, die für den Betrieb der Einspeisebühne genügt. Die Verwendung eines Gerätes zur Anzeige der Durchsatzmenge ist daher vorteilhaft;

— die Elektrodenanordnung eignet sich für gerade Elektroden mit einem Spitzenwinkel von weniger als 10° und gleichermassen für Elektroden mit parallelen Flächen sowie für gekrümmte Elektroden;

— bei der gleichen Anordnung können Einspeisungsbühnen unterschiedlicher Länge und Formen entsprechend den verschiedenen auszuführenden Arbeiten eingesetzt werden.

Das Hauptanwendungsgebiet der Anordnung nach der Erfindung liegt in Bereichen, in denen feine tiefe Schlitze in Werkstücken, beispielsweise in Kunststoffgussformen oder in Spritzgussformen hergestellt werden sollen. Die Möglichkeit, mit Elektroden mit parallelen Flächen zu arbeiten, ermöglicht die allgemeine Anwendung im mechanischen Werkzeugbau. Die Möglichkeit, mit gekrümmten Elektroden zu arbeiten, eröffnet verschiedene Anwendungsgebiete, beispielsweise die Herstellung von Gussformen für Ventilatorflügel oder von Turbinenschaufeln.

**Patentansprüche:**

1. Elektrodenanordnung für eine Elektroerosionsvorrichtung, mit einer Trägerplatte (1) für die Elektrode (2) und einer Einspeisevorrichtung (4, 5) für ein flüssiges Dielektrikum, dadurch gekennzeichnet, dass die Einspeisevorrichtung (4, 5) an der Trägerplatte (1) parallel zu einer Seitenfläche der Elektrode (2) verschiebbar befestigt ist, durch eine Vorrichtung (14) in ständiger Berührung mit dem Werkstück (3) gehalten wird und eine nichtleitende Einspeisebühne (4) mit mehreren Öffnungen umfasst, die dem Arbeitsbereich das Dielektrikum in mehreren gerichteten Strahlen zuführt.

2. Anordnung nach Anspruch 1, dadurch gekennzeichnet, dass die Einspeisevorrichtung (4, 5) Mittel zum Positionieren und Schwenken der Einspeisebühne (4) umfasst.

3. Anordnung nach einem der beiden Ansprüche 1 oder 2, dadurch gekennzeichnet, dass auf der Trägerplatte (1) zum Positionieren und Ausrichten der Einspeisebühne (4) ein verschiebbarer Schlitten (8) sitzt, an dem über ein Schwenklager (9) mit Drehzapfen (10) eine Trägerschiene (5) schwenkbar befestigt ist, an deren unteren Ende die Einspeisebühne (4) angeordnet ist.

4. Anordnung nach Anspruch 3, dadurch gekennzeichnet, dass die Einspeisebühne (4) mittels Einstellschrauben (7) relativ zu der Trägerschiene (5) justierbar ist.

5. Anordnung nach einem der Ansprüche 1 bis 4, dadurch gekennzeichnet, dass die Vorrichtung, die die Einspeisebühne (4) in ständiger Berührung mit dem Werkstück (3) hält, aus einer Feder (14) besteht.

6. Anordnung nach einem der Ansprüche 1 bis 5, dadurch gekennzeichnet, dass auf der Trägerplatte (1) ein Zwischenstück (15) zur Verbindung der Anordnung mit dem Kopf einer Elektroerosionsvorrichtung befestigt ist.

**Claims**

1. An electrode arrangement for an electrical discharge machining apparatus, comprising a carrier plate (1) for the electrode (2), and a feed means (4, 5) for feeding in a liquid dielectric, characterised in that the feed means (4, 5) is secured to the carrier plate (1) displaceably parallel to a side surface of the electrode (2), is held in constant contact with the workpiece (3) by a means (14) and includes a non-conducting feed platform (4) having a plurality of openings, for feeding the dielectric to the working area in a plurality of directed jets.

2. Arrangement according to claim 1, characterised in that the feed means (4, 5) has means for positioning and pivoting the feed platform (4).

3. An arrangement according to claim 1 or 2, characterised in that a slidable carriage (8) is carried on the carrier plate (1) for positioning and aligning the feed platform (4), wherein a carrier bar (5) is pivotally secured to the carriage (8) by way of a pivot mounting (9) with trunions (10), and the feed platform (4) is disposed at the lower end of said carrier bar (5).

4. An arrangement according to claim 3, characterised in that the feed platform (4) is adjustable relative to the carrier bar (5) by means of adjusting screws (7).

5. An arrangement according to one of claims 1 to 4, characterised in that the means for holding the feed platform (4) in constant contact with the workpiece (3) comprises a spring (14).

6. An arrangement according to one of claims 1 to 5, characterised in that, secured to the carrier plate (1), is an intermediate member (15) for connecting the arrangement to the head of an electrical discharge machining apparatus.

**Revendications**

1. Disposition d'électrode pour une machine d'électro-érosion avec une platine-support (1) pour une électrode (2) et un dispositif d'injection (4, 5) pour un diélectrique liquide, caractérisée en ce que le dispositif d'injection (4, 5) est fixé sur la platine-support (1) parallèlement à une face latérale de l'électrode (2), de manière à pouvoir coulisser, en ce qu'elle est maintenue constamment en position d'appui contre la pièce à usiner (3) par un dispositif (14), et en ce qu'elle comprend une rampe d'injection non conductrice (4) avec plusieurs orifices, lesquels amènent le diélectrique dans la zone d'usinage par plusieurs jets orientés.

2. Disposition selon la revendication 1, caractérisée en ce que le dispositif d'injection (4, 5) comprend des moyens permettant de positionner et d'orienter la rampe d'injection (4).

3. Disposition selon l'une des revendications 1 ou 2, caractérisée en ce qu'un chariot mobile (8) est placé sur la platine-support (1) pour permettre de positionner et d'orienter la rampe d'injection (4), chariot sur lequel se trouvent une règle-support (5) et un coulisseau (9) à tourillons (10) servant à orienter la règle-support, et en ce qu'à l'extrémité inférieure de cette règle-support est disposée la rampe d'injection (4).

4. Disposition selon la revendication 3, caractérisée en ce que la rampe d'injection (4) peut être dégauchie à l'aide de vis de réglage (7), par rapport à la règle-support.

5. Disposition selon l'une des revendications 1 à 4, caractérisée en ce que le dispositif qui maintient constamment la rampe d'injection (4) en position d'appui contre la pièce à usiner (3) est constitué par un ressort (14).

6. Disposition selon l'une des revendications 1 à 5, caractérisée en ce qu'une pièce intermédiaire (15) est portée par la platine-support (1) pour fixer la disposition à la tête de la machine d'électro-érosion.